# EUROPÄISCHE PATENTSCHRIFT

(11) **EP 1 794 450 B1**
(45) Veröffentlichungstag und Bekanntmachung des Hinweises auf die Patenterteilung: **29.08.2012**
(21) Anmeldenummer: 05796218.5
(22) Anmeldetag: 23.09.2005
(51) Int. Cl.: F03D 9/00, F03D 11/00, H02K 9/26, H02K 7/18

(54) **WINDENERGIEANLAGE MIT EINER GENERATORKÜHLUNG**
WIND TURBINE COMPRISING A GENERATOR COOLING SYSTEM
EOLIENNE POURVUE D'UN SYSTEME DE REFROIDISSEMENT DU GENERATEUR

(30) Priorität: 24.09.2004 DE 102004046700
(43) Veröffentlichungstag der Anmeldung: 13.06.2007
(60) Teilanmeldung: 09172492.2
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2005/010304
(87) Internationale Veröffentlichungsnummer: WO 2006/032515

(56) Entgegenhaltungen:
- EP-A- 1 586 769
- DE-A1- 10 233 947
- DE-C- 243 208
- US-A- 5 557 153
- PATENT ABSTRACTS OF JAPAN Bd. 007, Nr. 239 (E-206), 25. Oktober 1983 (1983-10-25) & JP 58 127546 A (TOKYO SHIBAURA DENKI KK), 29. Juli 1983 (1983-07-29)

## Beschreibung

Die vorliegende Erfindung betrifft eine Windenergieanlage mit einem Turm, mit einer auf dem Turm drehbar gelagerten Gondel, einem innerhalb der Gondel angeordneten Generator mit Läufer und Ständer und mit wenigstens einem Lüfter im Bereich der Gondel.

Solche Windenergieanlagen sind seit langer Zeit im Stand der Technik bekannt. Es gibt eine Vielzahl von Ausführungsformen, die teils mit Ölkühlung teils mit Luftkühlung oder auch mit Wasserkühlung arbeiten. Dabei ergibt sich in allen Fällen das Problem, dass Verluste auftreten, die auch in Form von Wärme auftreten und abgeführt werden müssen. Da jede Komponente bestimmte thermische Belastungsgrenzen hat, die eingehalten werden müssen, muss also eine ausreichende Kühlung vorgesehen sein, um die überschüssige Wärme abführen und eine Beschädigung durch überhöhte Temperaturen vermeiden zu können.

Die Erfindung ist insbesondere auf Windenergieanlagen gerichtet, die mit Luftkühlung arbeiten. Derartige Kühlsysteme sind aus den Windenergieanlagen der Firma Enercon (Typen E-40, E-44, E-58 oder auch E-66) bekannt. Dabei ist ein Ventilator in der Gondel eingelassen, welcher Kühlluft von außen her ansaugt und in das Innere der Gondel bläst, so dass die Kühlluft durch Öffnung des Generators strömt und hierbei die einzelnen sich erwärmenden Bauteile kühlt. Die erwärmte Luft strömt dann regelmäßig entweder in einen geschlossenen Kühlkreislauf zurück oder tritt durch den Luftspalt zwischen dem Spinner und dem feststehenden Teil der Gondel nach außen weg.

Mit dem Ansteigen der Leistung der Generatoren steigt auch der Kühlbedarf dieser Generatoren an, um deren Temperaturen auch im Volllastbetrieb unterhalb kritischer Grenzen sicher halten zu können.

Bei den Windenergieanlagen gemäß dem Stand der Technik handelt es sich um einen sogenannten Luv-Läufer. D. h., die Gondel der Windenergieanlage ist derart ausgerichtet, dass sich die Rotorblätter an der dem Wind zugewandten Seite der Gondel befinden. Auf der an der vom Wind abgewandten Seilte (der Leeseite) in der Gondel-Wandlung ist ein Lüfter angeordnet. Dieser Lüfter saugt Luft von außen an und befördert sie in die Gondel. Dort umströmt die Luft die Bauteile in der Gondel und sorgt so für einen Wärmeabtransport und damit für eine Kühlung.

Allerdings werden beim Betrieb des Lüfters auch in der Luft vorhandener Staub, Feuchtigkeit und Regen mit angesaugt und in das Innere der Gondel transportiert. Dies führt zu einer unerwünschten Verschmutzung der Gondel mit der Folge eines schnelleren Verschleißes von Bauteilen (allein wegen der abrasiven Wirkung von Staub oder Sand) und zu einer gerade bei Regenwetter unerwünscht hohen Luftfeuchtigkeit in der Gondel mit allen negativen Begleiterscheinungen.

DE 102 33 947 A1 zeigt eine Windenergieanlage mit einem Turm und einer auf dem Turm drehbar gelagerten Gondel. Innerhalb der Gondel ist ein Generator mit einem Läufer und einem Ständer angeordnet. Innerhalb der Gondel ist ein Lüfter vorgesehen.

Aufgabe der vorliegenden Erfindung ist es daher, den Eintrag von Feuchtigkeit, Sand und anderen Fremdstoffen in die Gondel sowie außen wahmehmbare Lüftergeräusche zu verringern sowie eine effizientere Kühlung zu ermöglichen.

Diese Aufgabe wird bei einer Windenergieanlage eingangs genannten Art gelöst durch eine Anordnung des Lüfters innerhalb der Gondel, wobei der Lüfter Au-βenluft durch einen nach unten offenen Luftspalt, insbesondere zwischen Turm und Gondel, ansaugt.

Dabei liegt der Erfindung die Erkenntnis zugrunde, dass die Luftströmung entlang der Windenergieanlage und insbesondere im Bereich der Gondel eine deutliche ausgeprägte Horizontalkomponente und allenfalls eine deutlich geringer ausgeprägte Vertikalkomponente aufweist. D. h., der Wind und damit die von ihm transportierten Fremdstoffe strömen von der Luvseite entlang der Gondel zur Leeseite und haben dann die Windenergieanlage passiert. Wenn also Luft durch einen nach unten offenen Luftspalt angesaugt wird, dann können allenfalls noch sehr feine Partikel mit angesaugt werden, die nämlich entgegen der Schwerkraftwirkung von dem Luftstrom nach oben getragen werden können. Damit wird das Ansaugen größerer Sand- und Staubteilchen und auch das Ansaugen von Regentropfen, die, wie jedermann weiß, erheblich schwerer sind, in hohem Maße verringert, wenn nicht sogar unterbunden.

Um über den gesamten Luftspalt verteilt eine möglichst gleichförmige Ansaugung der Außenluft zu erreichen und eine hohe Saugwirkung an ein oder zwei Stellen zu vermeiden, wird gemäß einer bevorzugten Weiterbildung der Erfindung vorgeschlagen, mehrere Lüfter innerhalb der Gondel voneinander beabstandet anzuordnen.

Besonders bevorzugt ist eine Bühne innerhalb der Gondel vorgesehen, mit unterhalb der Bühne angeordneten Lüftern und mit Luftaustritten für die angesaugte Luft oberhalb der Bühne. Dadurch gelingt es, die Bühne zur Führung des Luftstromes einzusetzen. Gleichzeitig ergibt sich unterhalb der Bühne eine Art Ruheraum, in der sich die angesaugte Luft beruhigen kann. Dabei können sich auch mitgeführte Fremdstoffe wie Staub- oder Sandpartikel der Schwerkraft folgend ablagern und werden damit in geringerer Zahl von den Lüftern innerhalb der Gondel weiter transportiert.

In einer insbesondere bevorzugten Weiterbildung der Erfindung ist die Bühne gegen die Gondel seitlich und nach unten derart abgedichtet, dass der Rest der Gondel gegenüber dem Ansaugbereich der Lüfter abgedichtet ist. Dadurch können zwar die Lüfter angesaugte Luft in den Bereich oberhalb der Bühne transportieren, diese angesaugte Luft kann aber die Bühne nicht umströmen und somit in einem Strömungs-Kurzschluss zu den Lüftern zurück gelangen. Vielmehr bleibt die von den Lüftern abgegebene Luft in dem übrigen Teil der Gondel und kann dort ihre Kühlwirkung entfalten.

Um eine besonders wirksame Kühlung des Generators zu erreichen ist eine bevorzugte Ausführungsform der Erfindung gekennzeichnet durch eine Abdichtung des Generators selbst und gegen die Gondel in der Weise, dass nur der Luftspalt zwischen Läufer und Ständer des Generators ein Abströmen der angesaugten Luft erlaubt. Die Luft kann deshalb nur durch den Luftspalt strömen und entsprechend Läufer und Startor des Generators mit größtmöglicher Wirksamkeit kühlen.

Um diese Kühlwirkung auch vorteilhaft für die Wicklungsköpfe der Startorwicklung verwirklichen zu können ist eine erfindungsgemäße Windenergieanlage bevorzugt gekennzeichnet durch am gesamten äußeren Umfang des Läufers vorgesehene Luftleitbleche, die in einem vorgegebenen Abstand den Luftspalt zwischen Läufer und Ständer abdecken und sich in radialer Richtung ein vorgegebenes Maß im Wesentlichen parallel zum Ständer des Generators erstrecken.

Eine besonders bevorzugte Weiterbildung betrifft eine Windenergieanlage mit einem unteren Abschnitt der Gondel, welcher ein vorgegebenes Maß im Wesentlichen parallel zum Turm verläuft und in einem unteren Rand endet. Um eine möglichst gleichförmige und damit auch geräuscharme Lufteinströmung zwischen Turm und Gondel zu erreichen, weist die Gondel einen wulstartigen ausgebildeten unteren Rand auf. Dieser wulstartig ausgebildete Rand verhindert weitgehend Verwirbelungen der angesaugten Luft, wie sie an einer stumpfen Kante entstehen und hilft so, eine durch die Verwirbelungen herbeigeführte Verengung des Strömungskanals und damit unerwünschte Verkleinerung des wirksamen Querschnitts und dadurch deutlich zu geringe einströmende Luftmenge mit einer daraus zwangsläufig folgenden zu geringen Kühlwirkung zu vermeiden.

In einer bevorzugten Weiterbildung der vorstehenden Ausführungsform ist eine erfindungsgemäße Windenergieanlage mit einen sich ein vorgegebenes Maß trichterförmig aufweitenden unteren Rand gezeigt. Dies führt auch ohne Anbringung eines Wulstes zu einem guten Ergebnis, da sich die Luftströmung an den sich aufweitenden Rand anschmiegen und glatt, ohne Verwirbelungen und entsprechende Geräusche und Strömungsverluste in die Gondel einströmen kann.

Die Erfindung ist dabei nicht nur für die Erstausrüstung von neuen Windenergieanlagen geeignet, sondern auch für die Nachrüstung bestehender Windenergieanlagen.

Die Erfindung erlaubt es dabei, auch bei einer bestehenden Windenergieanlage die Generatorleistung zu erhöhen und damit die gesamte Effizienz der Anlage zu verbessern, wobei die Maßnahmen zur Umsetzung der Erfindung vergleichsweise gering sind und eine nachhaltige Verbesserung der Kühlung und damit auch der Verringerung des gesamten Wärmestresses der Anlage ermöglicht.

Weitere Ausgestaltungen der Erfindung sind Gegenstand der Unteransprüche.

Nachfolgend wird ein Ausführungsbeispiel anhand der Figuren näher erläutert. Dabei zeigen:
- Fig. 1: eine Seitenansicht der Gondel einer erfindungsgemäßen Windenergieanlage;
- Fig. 2: eine vergrößerte und vereinfachte Teil-Darstellung der in Figur 1 gezeigte Gondel;
- Fig. 3: eine Draufsicht auf die Bühne im Inneren der Gondel;
- Fig. 4: eine Frontalansicht des Gondelinneren mit Blick auf den Generator;
- Fig. 5: eine vereinfachte und vergrößerte Detailansicht eines Teils des Generators;
- Fig. 6: eine Teil-Seitenansicht einer Windenergieanlage gemäß einem weiteren Ausführungsbeispiel;
- Fig. 7: einen schematischen Querschnitt durch eine Gondel der Windenergieanlage gemäß einem weiteren Ausführungsbeispiel;
- Fig. 8: einen schematischen Querschnitt einer Gondel einer Windenergieanlage gemäß einem weiteren Ausführungsbeispiel der Erfindung; und
- Fig. 9: eine perspektivische Teilschnittansicht einer Gondel gemäß einem weiteren Ausführungsbeispiel der Erfindung.

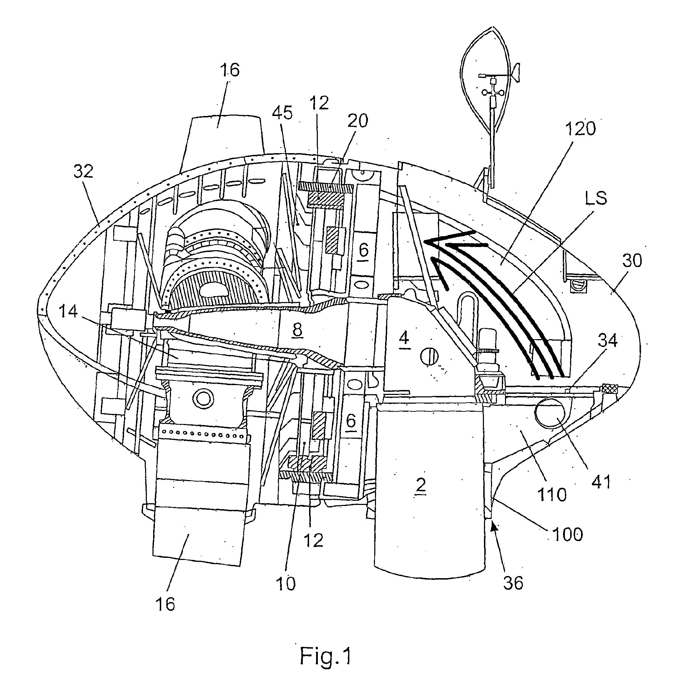

Figur 1 zeigt eine Seitenansicht einer Gondel einer erfindungsgemäßen Windenergieanlage. In Figur 1 ist auf einem Turmkopf 2 ein Maschinenträger 4 dargestellt, an dem wiederum ein Statorträger 6 und Achszapfen 8 angebracht sind. Um den Achszapfen 8 herum sind drehbar eine Nabe 14 mit den daran befestigten Rotorblättern 16 sowie ein Polrad 10 des Generators angeordnet.

Von dem Statorträger 6 wird der Stator 20 (Ständer) des Generators getragen, während das Polrad 10 (Läufer) mit Polwicklungen und Polschuhen 12 sich innerhalb des Generators zusammen mit der Nabe 14 auf dem Achszapfen 8 dreht. Der Aufbau auf dem Turmkopf 2 ist von einer Gondel 30, 32 umschlossen, die aus einer Gondelverkleidung 30 sowie einer Nabenverkleidung 32 besteht. Während die Nabenverkleidung 32 mit der Nabe 14 mitdreht, umschließt die Gondelverkleidung 30 den stillstehenden Teil der Gondel. Dabei ist mit "stillstehen" natürlich nur die durch den Wind verursachte und über die Rotorblätter 16 auf die Nabe 14 und den Generator übertragene Rotation gemeint. Die Windrichtungsnachführung bleibt dabei zunächst unberücksichtigt.

In dem hinteren, von der Gondelverkleidung 30 verkleideten Teil der Gondel befindet sich eine begehbare Gondelbühne 34. Unterhalb dieser Gondelbühne 34 ist ein Lüfter 41 dargestellt. Dieser Lüfter 41 saugt durch einen Luftspalt 6 zwischen dem Turmkopf 2 und dem unten offenen Ende der Gondelverkleidung 3 Luft von Außen an. Da sich der Ausgang des Lüfters 41 an der Oberseite der Gondelbühne 34 befindet, wird der von dem Lüfter angesaugte Luftstrom LS oberhalb der Gondelbühne 34 austreten und dann durch die Gondelverkleidung 30 zum Generator hin umgelenkt. Dadurch kommt eine gerichtete Luftströmung LS zum Generator hin und natürlich auch durch die Öffnungen des Generators hindurch zustande. Diese Luftströmung LS führt dabei Wärme ab und kühlt so den Generator.

Da die Gondelverkleidung 30 einen unteren Abschnitt 100 mit einem nach unten offenen Spalt 36 aufweist, durch welchen die Luft von dem Lüfter 41 angesaugt wird, werden allenfalls kleinere Schwebeteilchen in der Luft mit angesogen und schwerere Teile wie Staub oder Sandkörner und Regentropfen oder Hagelkörner bleiben weitestgehend außerhalb der Gondel.

Im Bereich der Nabenverkleidung 32 sind zwischen dem Generator und der Nabe 14 Luftleitbleche 45 erkennbar, welche die durch den Generator strömende Luft LS in Richtung des äußeren Generatorumfangs umleiten, so dass die dort im Luftstrom LS liegenden Wicklungsköpfe 22 der Wicklung des Stators 20 gezielt im Strömungsweg der abströmenden Luft liegen und daher ebenso gezielt gekühlt werden können. Die Luft kann dann durch einen Luftspalt zwischen der Gondelverkleidung 30 und der Nabenverkleidung 32 austreten, so dass stets frische Luft von dem Lüfter 41 nachgefördert werden kann.

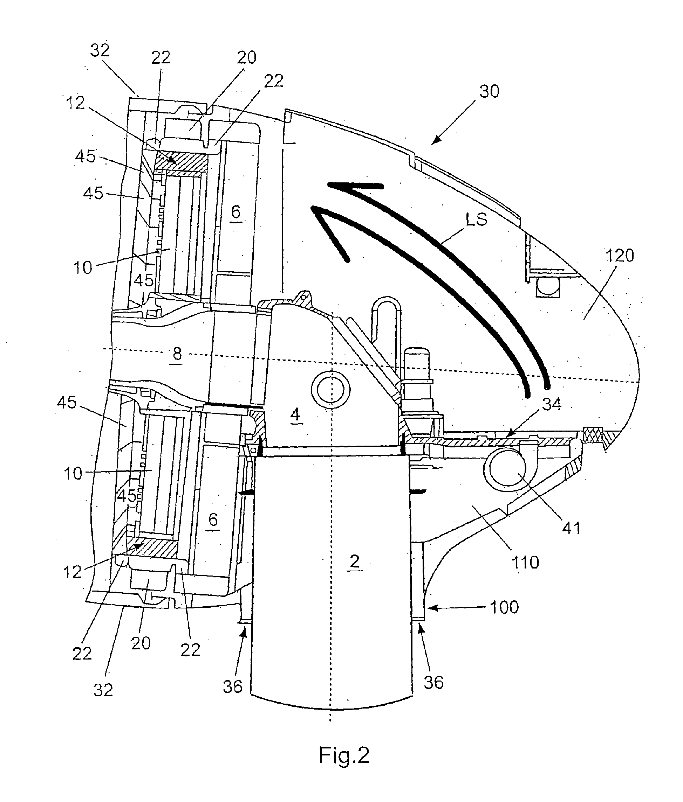

Figur 2 zeigt eine vereinfachte und vergrößerte Darstellung eines Teils der in Figur 1 gezeigten Gondel der Windenergieanlage. In dieser Figur sind wieder der auf dem Turmkopf 2 angeordnete Maschinenträger 4 und der wiederum daran angebrachte Achszapfen 8 und der Statorträger 6 gut erkennbar. An dem Statorträger 6 ist der Stator 20 des Generators mit der Statorwicklung und den Wicklungsköpfen 22 angebracht. Um den Achszapfen 8 herum ist das Polrad 10 des Generators mit den Polwicklungen und Polschuhen 12 drehbar gelagert. An der der (in dieser Figur nicht dargestellten) Nabe zugewandten Seite des Polrades 10 sind Luftleitbleche 45 angeordnet. Diese Luftleitbleche 45 erstrecken sich über den gesamten Umfang des Polrades und sind radial nach Außen derart abgebogen, dass sie ein vorgegebenes Maß im Wesentlichen parallel zum Stator 20 und der Statorwicklung mit den Polköpfen 22 verlaufen. Im Bereich der Gondelverkleidung 30 ist wiederum gut die Gondelbühne 34 mit dem darunter angeordneten Lüfter 41 zu erkennen, dessen Luftaustritt oberhalb der Gondelbühne 34 liegt. Der Lüfter 41 saugt Außenluft durch den Luftspalt 36 an. Dieser Luftspalt 36 befindet sich zwischen dem Turmkopf 2 und dem unten offenen unteren Abschnitt 100 der Gondelverkleidung 30 dabei ist in dieser Figur gut zu erkennen, dass der untere Rand 100 der Gondelverkleidung sich ein vorgegebenes Maß trichterförmig nach außen öffnet. Dadurch kann sich der Luftstrom besser an die Innenwand dieses Bereichs der Gondelverkleidung 30 anlegen und ohne Verwirbelungen in die Gondel einströmen. Dadurch kann der gesamte Querschnitt des Luftspalts 36 als wirksame Ansaugfläche verwendet werden, die auch nicht von Verwirbelungen beeinträchtigt bzw. verringert wird.

Die durch den Luftspalt 36 angesaugte Luft kann sich im Raum 110 unterhalb der Gondelbühne 34 durch den größeren Querschnitt und die damit ein hergehende Verlangsamung der Strömung etwas beruhigen, bevor sie von dem Lüfter 41 zur Oberseite 120 der Gondelbühne 34 transportiert wird. Die an der Oberseite 120 der Gondelbühne 34 austretende Luft wird wiederum von der Gondelverkleidung 30 in Richtung des Generators 6, 10, 12, 20, 22 geführt, durchströmt den Generator und kann auf diese Weise Wärme abführen und so den Generator kühlen.

Nachdem die Luft durch den Generator hindurchgeströmt ist, wird sie von den Luftleitblechen 45 noch gezielt über die Wicklungsköpfe 22 geleitet, bevor sie durch einen Luftspalt zwischen der Gondelverkleidung 30 und der Nabenverkleidung 32 austritt und somit die Wärme abtransportiert.

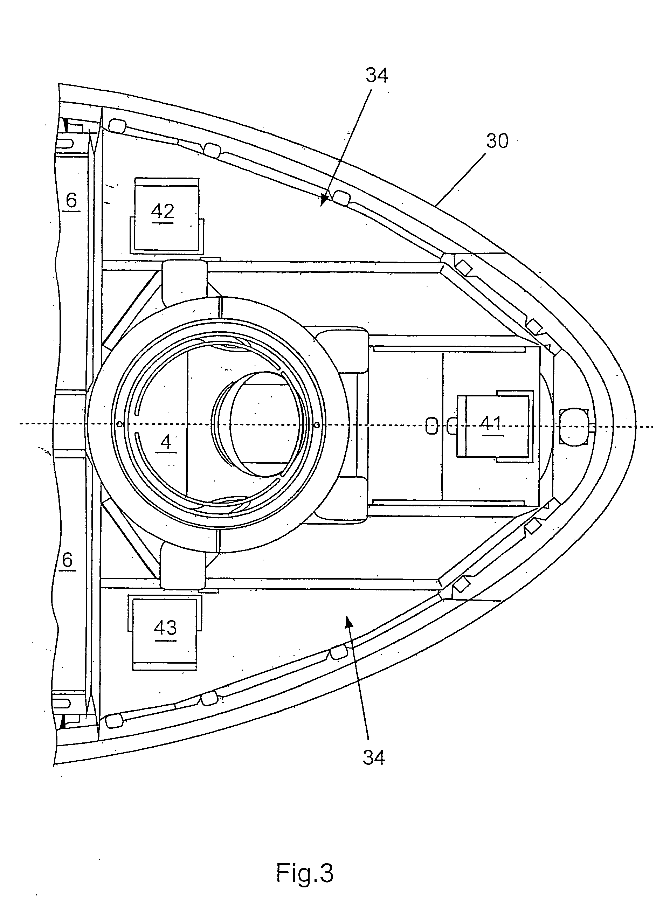

Figur 3 zeigt eine Draufsicht auf den hinteren Teil der Gondel. In dieser Figur ist gut der Maschinenträger 4 zu erkennen, an dem der Statorträger 6 des Generators angeordnet sind. In dieser Figur umschließt die Gondelbühne 34 den Maschinenträger 4 und in der Gondelbühne 34 sind drei Lüfter 41, 42 und 43 bzw., da es sich ja um eine Draufsicht handelt, deren Luftaustritte erkennbar. Daraus wird deutlich, dass die erforderliche Luftströmung LS zur Kühlung des Generators nicht nur von einem einzelnen Lüfter sondern auch von einer Mehrzahl von Lüftern erzeugt werden kann.

Ein weiterer Aspekt der Erfindung ist die Abdichtung der Gondelbühne 34 gegen die Gondelverkleidung 30. Auf diese Abdichtung ist eine große Sorgfalt zu verwenden, um einen Strömungs-Kurzschluss zu verhindern. Ein solcher Strömungs-Kurzschluss käme zustande, wenn die von den Lüftern 41, 42, 43 in den Raum oberhalb der Gondelbühne 34 geförderte Luft durch Undichtigkeiten zwischen der Gondelbühne 34 und der Gondelverkleidung 30 die Gondelbühne 34 umströmen und somit wieder in den Ansaugbereich der Lüfter 41, 42, 43 gelangen könnte. Dies hätte nämlich zur Folge, dass diese die Gondelbühne 34 umströmende Luftmenge nicht in Richtung des Generators abströmen würde und somit zur Kühlung nicht zur Verfügung stünde.

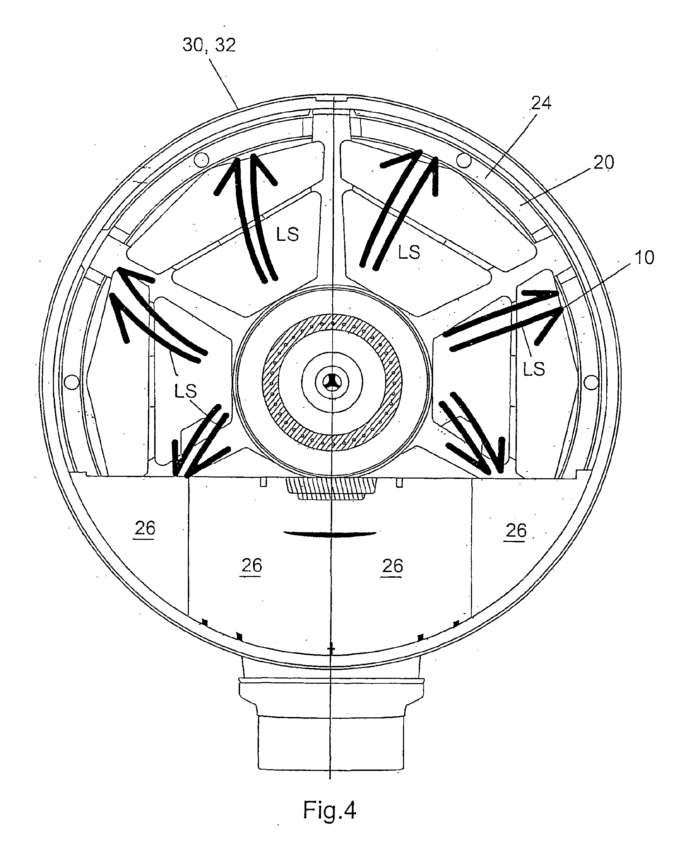

Um die Wirksamkeit der Kühlung des Generators durch die Luftströmung noch weiter zu erhöhen, sind weitere Abdichtungsmaßnahmen vorgesehen. Diese sind in Figur 4 erkennbar. In dieser Figur ist eine Frontalansicht des Generators aus Richtung der Gondelbühne dargestellt, die aber in dieser Figur nicht eingezeichnet ist.

Im mittleren Bereich ist der Achszapfen 8 gut erkennbar. Um diesen Achszapfen 8 herum ist das Polrad 10 des Generators drehbar angeordnet. Das Polrad 10 dreht sich innerhalb des Stators 20, wobei ein Generator-Luftspalt 24 zwischen Polrad 10 und Stator 20 vorhanden ist.

Um eine möglichst wirksame Kühlung zu verwirklichen, soll die Luft ausschließlich durch den Generator-Luftspalt 24 strömen. Deswegen ist das Polrad 10 in sich so abgedichtet, dass dort keine Luft hindurchströmt. Weiterhin ist der Stator 20 entgegen die Gondelverkleidung 30 ebenfalls abgedichtet. Damit bleibt dem Luftstrom LS nur der Weg durch den Generator- Luftspalt 24. Auf diese Weise wird die beste Wirkung erzielt.

Um einen Strömungs-Kurzschluss auch an der dem Generator zugewandten Seite der (in dieser Figur nicht dargestellten) Gondelbühne zu vermeiden, sind Abdeckbleche 26 vorgesehen. Diese schließen direkt unterhalb der (nicht dargestellten) Gondelbühne an, und dichten den Ansaug-Bereich gegen den Rest der Gondel ab, oder vice versa. Damit wird die Luft innerhalb der Gondel und oberhalb der Gondelbühne zum Generator hingeführt und kann aus der Betrachtungsebene dieser Figur hinter den Abdeckblechen 26 auch durch den dort befindlichen Teil des Generators-Luftspaltes 24 strömen. Dazu sind die Abdeckbleche 26 ein vorgegebenes Maß von dem Generator beabstandet, um diese Luftströmung zu ermöglichen.

Dadurch strömt die gesamte von den Lüftern geförderte Luft durch den Generator-Luftspalt 24 und transportiert so die größtmögliche Wärmemenge ab.

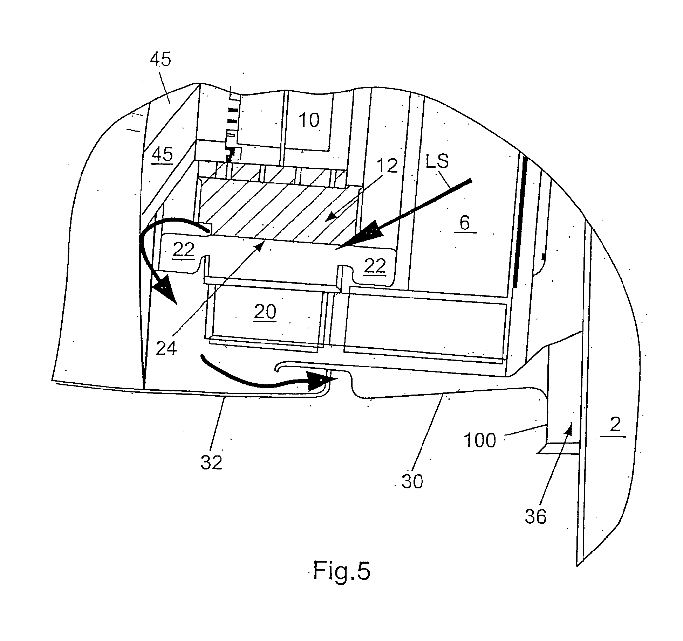

Figur 5 zeigt nochmals vergrößert einen Bereich des Generators und den Strömungsweg der Luft LS in diesem Bereich. Im rechten Teil dieser Figur ist der Turm 2 erkennbar und der zwischen den Turm 2 und dem unten offenen, sich trichterförmig aufweitenden Rand der Gondelverkleidung ausgebildete Luftspalt 36, der auch als Azimutspalt bezeichnet wird. Durch die Beschreibung der Figuren 1 bis 4 ist das Ansaugen der Luft und Abgeben in das Innere der Gondel sowie die Führung der Luft zum Generator hin. beschrieben, in dieser Figur ist erkennbar, dass die Luftströmung durch den Generator-Luftspalt 24 zwischen den am Polrad 10 angeordneten Polschuhen 12 und der Statorwicklung mit den Wicklungsköpfen 22 hindurch strömt, die am Stator 20 angebracht ist, der von dem Statorträger 6 gehalten wird. Nachdem die Luftströmung diesen Generator-Luftspalt 24 passiert hat, trifft sie auf die am Polrad 10 angeordneten Luftleitbleche 45 und wird von diesen derart umgelenkt, dass sie den in der Figur linken Wicklungskopf 22 gezielt umströmt und somit auch dort zuverlässig die Wärme abführt. Danach strömt die Luftströmung durch einen Luftspalt zwischen der Nabenverkleidung 32 und der Gondelverkleidung 30 wieder ins Freie.

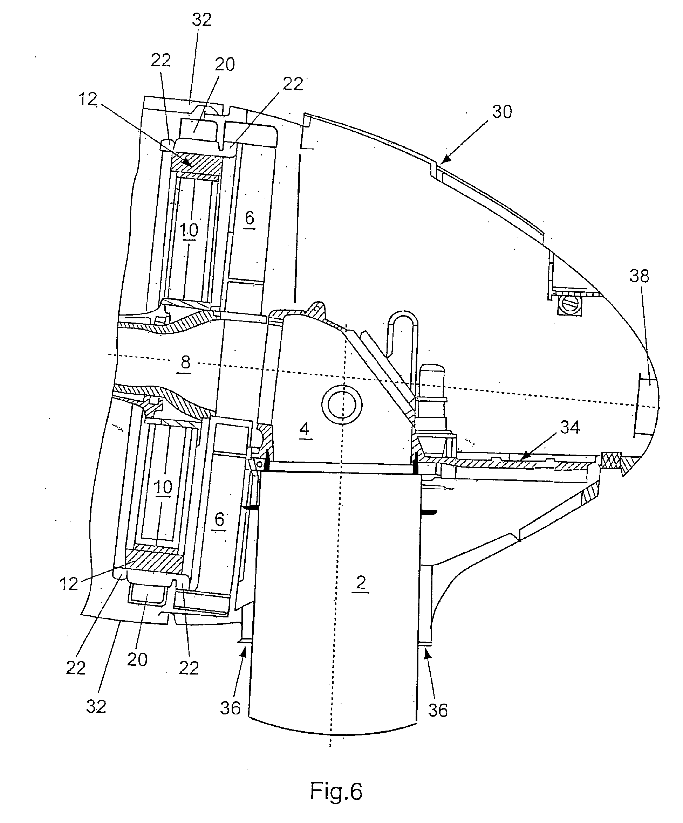

Figur 6 zeigt eine Teilansicht einer Windenergieanlage gemäß einem weiteren Ausführungsbeispiel. Im Gegensatz zu den in den Figuren 1 bis 5 gezeigten Windenergieanlagen weist diese Windenergieanlage einen Lüfter 38 an einem Ende der Gondel 30 auf. Dieser Lüfter 38 dient dazu, einen Luftstrom innerhalb der Gondel zu erzeugen, um den Generator sowie andere sich erwärmende Teile zu kühlen. Wie vorstehend beschrieben, wird dabei der Läufer 10 und der Ständer 20 des Generators derart abgedichtet, dass sich der durch den Lüfter 38 erzeugte Luftstrom lediglich durch den Luftspalt zwischen Läufer und Ständer 10, 20 vom hinteren Teil der Gondel zu dem vorderen Teil der Gondel bewegen kann und somit zur Kühlung des Generators beitragen kann. Mit anderen Worten, die Kühlung des Generators erfolgt wie in den oben beschriebenen Ausführungsbeispielen, wobei jedoch ein Lüfter 38 an der Außenseite der Gondel 30 verwendet wird, um Frischluft zuzuführen.

Gemäß der Erfindung werden die Lüftersysteme in eine Gondelbühne eingebaut und blasen die angesaugte Luft nach oben in den Bereich der Gondel, der direkt an den hinteren Teil des Generators (von der Rotorseite aus gesehen) angrenzt. Die angesaugte Luft muss dabei entweder aus dem Turm selbst angesaugt werden oder bevorzugt aus dem Turmspalt, also dem Spalt zwischen dem Maschinenträger und dem Turm, an dem auch das Azimutlager liegt, um die Anlage in einem gewünschten Winkel zum Wind anzustellen.

Der Saugraum wird dabei Richtung Generator nach vorne ebenso, zum Beispiel mit Blechen, abgedichtet, und auch der Spalt zwischen der Gondelbühne und dem Gondelgehäuse (aus glasfaserverstärktem Kunststoff) wird zum Beispiel mit Blech verschlossen.

Auf der Spinner-Seite der Gondel leiten Luftführungsbleche die den Luftspalt durchsetzende Kühlluft am Wickelkopf des Stators vorbei, und die so erwärmte Luft kann direkt durch den Luftspalt zwischen Spinner und Gondel nach außen heraustreten.

Sämtliche Öffnungen im Rotor werden dabei bevorzugt vollständig verschlossen, was nicht nur für einfache Bohrungen gilt, sondern auch für das Mannloch, also die Öffnung, die vorgesehen ist, damit im Bedarfsfall ein Servicemechaniker vom hinteren Gondelteil in den Spinner eintreten kann, um dort Wartungsarbeiten vorzunehmen. Dieses Mannloch kann beispielsweise mit einer Plane verschlossen werden, die im Reparaturfall leicht weggenommen oder geöffnet werden kann. Nach den Wartungsarbeiten kann das Mannloch mit dieser Plane wieder luftdicht verschlossen werden.

Die Gondel umschließt regelmäßig den Statorring des Stators und erfindungsgemäß ist auch vorgesehen, dass ein etwaiger Spalt zwischen der Gondel und dem Statorring durch eine Dichtung luftdicht abgeschlossen wird.

Die Erfindung hat nicht nur zur Folge, dass ein vorhandener Generator besser ausgenutzt werden kann, sondern auch, dass erheblich weniger elektrische Lüfterleistung notwendig ist, um für eine ausreichende Kühlung zu sorgen.

Wenn man sich einmal vergegenwärtigt, dass bei einer Windenergieanlage vom Typ Enercon E-48 der Generatorluftspalt etwa eine Querschnittsfläche von 0,5 m² hat, und dass ansonsten noch irgendwelche anderen Löcher im Rotor eine Querschnittsfläche von 0,1 m² aufweisen, dann verringert sich dadurch schon alleine die Lüfterleistung um wenigstens 20%.

Alternativ zu dem oben beschriebenen Luftspalt zwischen dem Turm und dem unteren Abschnitt 100 der Gondel können auch Öffnungen im unteren Abschnitt der Gondel vorgesehen werden. Derartige Öffnungen können beispielsweise Gitter, Schlitze oder dergleichen sein. Alternativ bzw. zusätzlich dazu kann eine nach Lee ausgerichtete Hutze oder nach Lee ausgerichtete Öffnungen in der Gondel vorgesehen werden, um die vorbeiströmende Luft rückwärts einzusaugen.

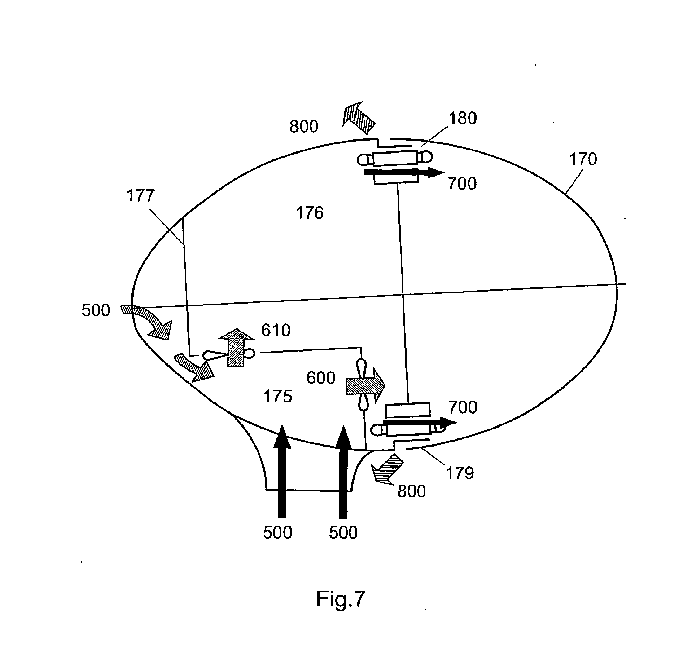

Fig. 7 zeigt einen schematischen Querschnitt durch eine ,Gondel der Windenergieanlage gemäß einem weiteren Ausführungsbeispiel. Die Gondel 170 weist einen Generator 180, einen Druckraum 176 und einen Saugraum 175 auf, welche durch eine Wand bzw. eine Bühne 177 voneinander getrennt sind. Die Wand 177 ist vorzugsweise im Wesentlichen luftdicht ausgestaltet und sorgfältig gegen die Gondel abgedichtet. In der Zwischenwand 177 sind zwei Lüfter 600, 610 vorgesehen, wobei einer der beiden Lüfter 600, 610 horizontal ausgerichtet ist und der zweite Lüfter 610 vertikal ausgerichtet ist. Vorzugsweise ist der vertikal ausgerichtete Lüfter derart angeordnet, dass die angesaugte Luft in den Bereich des Luftspaltes des Generators 180 geblasen wird. Der zweite Lüfter 610 bläst die Luft aus dem Saugraum 175 durch den Generatorluftspalt als Luftstrom 700 in einen Bereich hinter dem Generator 180. Somit wird Luft durch einen Turmspalt oder am Heck der Gondel in den Saugraum 175 angesaugt, von wo die Luft durch die Lüfter 600, 610 in den Druckraum 176 geblasen wird. Da in dem Druckraum 176 ein gewisser Überdruck vorhanden ist, entweicht die Luft durch den Luftspalt des Generators 180 und kühlt dabei den Generator entsprechend. Anschließend tritt die Luft aus einem Haubenluftspalt 179 an der Gondel 170 aus.

Der Luftstrom 700 durch den Generatorluftspalt wird unterstützt durch den ersten, horizontal ausgerichteten Lüfter 600. Sowohl der erste als auch der zweite Lüfter 600, 610 können jeweils durch einen oder mehrere Lüfter verwirklicht sein.

Bei der Ausgestaltung des Innenraums der Gondel sowie der Abdichtwand 177 ist es wichtig, dass diese Elemente gegen die Gondel dicht sind, da Leckstellen die Lüfterleistung und somit die Generatorkühlung vermindern.

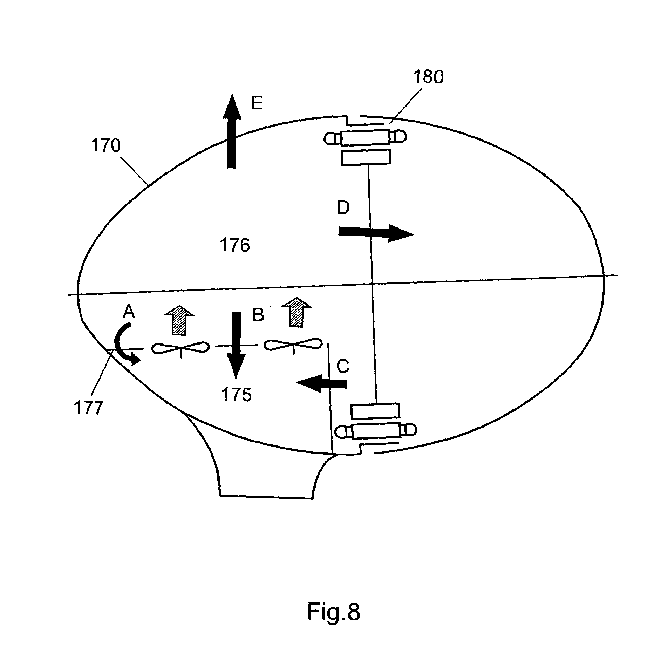

Fig. 8 zeigt einen schematischen Querschnitt einer Gondel einer Windenergieanlage gemäß einem weiteren Ausführungsbeispiel der Erfindung. In Fig. 8 werden insbesondere diejenigen Stellen gezeigt, an denen mögliche Lecks auftreten können. Ein erstes Leck A kann beispielsweise zwischen der Bühne 177 und der Haube 170 der Gondel auftreten. Weitere Lecks B können zwischen der Bühne 177 und einem Maschinenträger der Gondel, insbesondere durch Kabellöcher in der Bühne 177 auftreten. Ferner können Lecks C zwischen der Vorderwand der Abgrenzung zwischen dem Saugraum und dem Druckraum sowie der Haube der Gondel 170 auftreten. Ein weiteres Leck D kann durch Löcher im Läufer des Generators der Windenergieanlage auftreten. Ein weiteres Leck E kann durch die Haubenluke auftreten. Schließlich kann ebenfalls ein weiteres Leck durch Kabellöcher im Maschinenträger auftreten.

All die oben angeführten möglichen Lecks müssen durch geeignete Maßnahmen abgedichtet werden, um eine möglichst gute Kühlung des Generators zu erhalten.

Durch das Vorsehen einer Bühne mit einer Vorderwand und ggf. einer weiteren Wand, welche parallel zum Heck der Gondel angeordnet ist, kann das Innere der Gondel in einen Druckraum und in einen Saugraum eingeteilt werden.

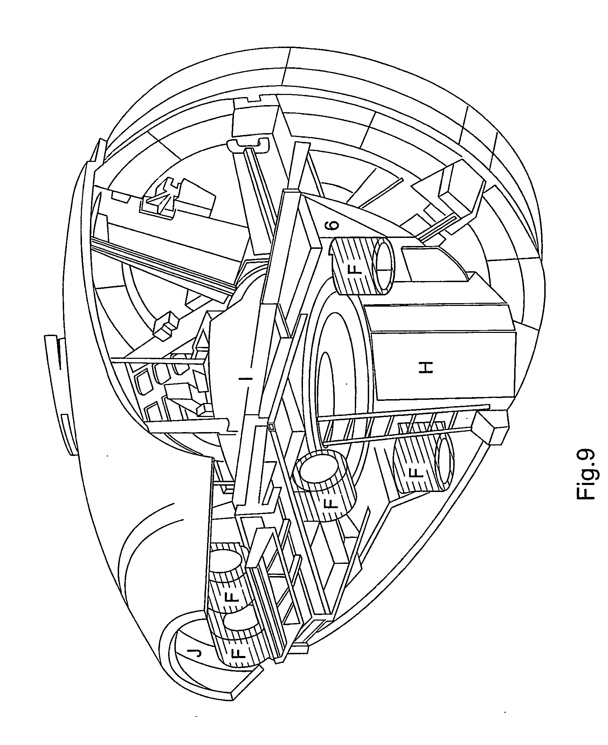

Fig. 9 zeigt eine perspektivische Teilschnittansicht einer Gondel gemäß einem weiteren Ausführungsbeispiel der Erfindung. Unter der Bühne der Gondel sind Gondelbleche G und eine Gondelplane H angeordnet. Hierbei schließen die Kanten der Bleche und der Plane mit Dichtungsblechen I gegen die Außenwand der Gondel ab. Am Heck der Gondel trennt eine Bühnenplane J den Saugraum vom Druckraum ab. Hier sind fünf Lüfter F gezeigt, welche Luft durch den Turmspalt und/oder durch das Heckloch ansaugen und die Luft nach oben bzw. nach vorne blasen. Eine derartige Ausgestaltung der Lüfter sowie der Gondel ist vorteilhaft, da weniger Lärm nach außen dringt und da weniger Regen bzw. Staub in die Anlage eingesaugt bzw. geblasen wird. Ferner können stärkere Lüfter installiert werden, und die Lüfter sind nachträglich austauschbar.

Gemäß einem weiteren Ausführungsbeispiel der Erfindung sind eine Vielzahl von Lüftern am Umfang des Generators verteilt, um Luft durch den Luftspalt des Generators zu blasen. Die Anzahl der Lüfter kann redundant ausgelegt werden, so dass, falls einer der Lüfter ausfällt, die anderen Lüfter eine ausreichende Luftmenge durch den Luftspalt des Generators blasen können, um die Kühlung aufrecht zu erhalten. Alternativ bzw. zusätzlich dazu kann die Leistung der Lüfter redundant ausgelegt werden, so dass die Lüfter einen ausgefallenen Lüfter zumindest kurzzeitig ersetzen können. Die Lüfter sind dabei vorzugsweise in der Nähe des Luftspalts am Umfang des Generators verteilt angeordnet.

Der Druckraum ist dabei derart ausgestaltet, dass ein Überdruck vorhanden ist, so dass auch einer der Lüfter ausfallen kann und trotzdem Luft durch den Luftspalt des Generators aufgrund der Druckdifferenz zwischen dem Druckraum und dem Bereich vor dem Generator fließen kann. Wie bereits oben angeführt, ist eine entsprechende Abdichtung des Druckraums vonnöten.

Gemäß einem weiteren Ausführungsbeispiel können Luftgitter über den insbesondere horizontal ausgerichteten Lüftern angeordnet sein, um somit zu vermeiden, dass Gegenstände in die Lüfter fallen können. Alternativ bzw. zusätzlich dazu kann auf den Luftgittern eine Matte vorgesehen werden, welche verhindert, dass Gegenstände in den Lüfter fallen. Die Matte ist dabei vorzugsweise lediglich an einem ihrer Enden befestigt, so dass die Matte bei Betrieb des Lüfters durch den durch den Lüfter erzeugten Luftstrom nach oben bewegt wird, und sobald der Lüfter abgeschaltet wird, wieder auf das Luftgitter fällt. Somit wird gewährleistet, dass die Lüfter auch vor kleinen Gegenständen geschützt werden, während der Betrieb der Lüfter nicht wesentlich gestört wird.

Durch den in Fig. 7 gezeigten senkrecht ausgerichteten Lüfter 600 kann der Luftstrom verkürzt werden und unmittelbar bzw. in die Nähe des Luftspalts des Generators gerichtet werden. Somit wird ein Luftstrom sowohl nach oben als auch nach vorne ermöglicht. Die dazu benötigte Luft wird durch den Turmspalt und ein Loch im Heck verwendet.

Typischerweise weist der Generatorluftspalt eine Querschnittsfläche von 0,5 m² auf. Wenn jedoch beispielsweise eine einzige Kabeldurchführung in der Bühne offen bleibt (0,1 m²), dann verringert sich die Kühlerleistung um etwa 20 %.

## Patentansprüche

1. Windenergieanlage mit einem Turm, mit einer auf dem Turm drehbar gelagerten Gondel, einem innerhalb der Gondel angeordneten Generator mit Läufer und Ständer und mit wenigsten einem Lüfter im Bereich der Gondel, **gekennzeichnet durch**
eine Anordnung des Lüfters (41, 42, 43) innerhalb der Gondel (30), wobei der Lüfter (41, 42, 43) Außenluft **durch** einen nach unten offenen ersten Luftspalt (36) zwischen Turm (2) und Gondel (30) ansaugt

2. Windanergieanlagen nach Anspruch 1, **gekennzeichnet durch** mehrere beabstandet voneinander innerhalb der Gondel angeordnete Lüfter (41, 42, 43).

3. Windenergieanlage nach einem vorstehenden Ansprüche, **gekennzeichnet durch** eine Bühne (34) der Gondel (30) und unterhalb der Bühne (34) angeordnete Lüfter (41, 42, 43), wobei Luftaustritte für die angesaugte Luft oberhalb der Bühne (34) angeordnet sind.

4. Windenergieanlage nach Anspruch 3, **gekennzeichnet durch** eine gegen die Gondel (30) seitlich und nach unten derart abgedichtete Bühne (34), dass die Gondel (30) gegenüber dem Bereich der Lüfter (41, 42, 40) abgedichtet ist.

5. Windenergieanlage nach einem der vorstehenden Ansprüche, **gekennzeichnet durch** eine Abdichtung des Läufers (10) selbst und des Ständers (20) gegen die Gondel (30) derart, dass im Wesentlichen nur ein zweiter Luftspalt (24) zwischen Läufer (10) und Ständer (20) des Generators offen bleibt und ein Abströmen der angesaugten Luft erlaubt.

6. Windenergieanlage nach einem der vorstehenden Ansprüche, **gekennzeichnet durch** am gesamten äußeren Umfang des Läufers (10) vorgesehene Luftleitbleche (45), die in einem vorgegebenen Abstand den zweiten Luftspalt (24) zwischen Läufer (10) und Ständer (20) abdecken und sich in radialer Richtung ein vorgegebenes Maß parallel zum Ständer (20) des Generators erstrecken.

7. Windenergieanlage nach einem der vorstehenden Ansprüche, wobei die Gondel einen unteren Abschnitt (100) aufweist, der ein vorgegebenes Maß im Wesentlichen parallel zum Turm verläuft und in einem unten: offenen Rand endet, **gekennzeichnet durch** einen wulstartig ausgebildeten unteren Rand.

8. Windenergieanlage nach dem Oberbegriff des Anspruches 7, **gekennzeichnet durch** einen sich ein vorgegebenes Maß trichterförmig aufweitenden unteren Abschnitt (100) der Gondel (30).

## Claims

1. A wind power installationhaving a tower, a nacelle rotatably supported on the tower, a generator disposed within the nacelle and having a rotor and a stator, and at least one fan in the region of the nacelle, **characterised by**
an arrangement of the fan (41, 42, 43) within the nacelle (30), wherein the fan (41, 42, 43) draws in outside air through a downwardly open first air gap (36) between the tower (2) and the nacelle (30).

2. A wind power installation according to claim 1, **characterised by** a plurality of fans (41, 42, 43) disposed in mutually spaced relationship within the nacelle.

3. A wind power installation according to either of the preceding claims, **characterised by** a platform (34) of the nacelle (30) and by fans (41, 42, 43) disposed beneath the platform (34), wherein air outlets for the indrawn air are disposed above the platform (34).

4. A wind power installation according to claim 3, **characterised by** a platform (34) that is sealed with respect to the nacelle (30) laterally and downwardly in such a way that the nacelle (30) is sealed in relation to the region of the fans (41, 42, 40).

5. A wind power installation according to any one of the preceding claims, **characterised by** a sealing of the rotor (10) itself and of the stator (20) with respect to the nacelle (30) in such a way that substantially only a second air gap (24) remains open between the rotor (10) and the stator (20) of the generator and permits the indrawn air to flow away

6. A wind power installation according to any one of the preceding claims, **characterised by** air guide plates (45) which are provided at the entire outer periphery of the rotor (10) and which cover the second air gap (24) between the rotor (10) and the stator (20) at a predetermined spacing and extend in the radial direction to a predetermined extent parallel to the stator (20) of the generator

7. A wind power installation according to any one of the preceding claims, wherein the nacelle has a lower portion (100) which extends to a predetermined extent in substantially parallel relationship with the tower and ends in a downwardly open edge, **characterised by** a lower edge of a bulbous configuration.

8. A wind power installation according to the preamble of claim 7, **characterised by** a lower portion (100) of the nacelle (30), which portion (100) widens in a funnel shape to a predetermined extent.

## Revendications

1. Eolienne comportant une tour, une nacelle logée de manière à pouvoir tourner sur la tour, un générateur disposé à l'intérieur de la nacelle avec un rotor et un stator, et au moins une soufflante dans la zone de la nacelle, **caractérisée par** un agencement de la soufflante (41, 42, 43) à l'intérieur de la nacelle (30), sachant que la soufflante (41, 42, 43) aspire de l'air extérieur par une première fente d'aération (36) ouverte vers le bas entre la tour (2) et la nacelle (30).

2. Eolienne selon la revendication 1, **caractérisée par** plusieurs soufflantes (41, 42, 43) disposées à distance les unes des autres à l'intérieur de la nacelle.

3. Eolienne selon l'une quelconque des revendications précédentes, **caractérisée par** une plateforme (34) de la nacelle (30) et des soufflantes (41, 42, 43) disposées au-dessous de la plateforme (34), sachant que des sorties d'air pour l'air aspiré sont disposées au-dessus de la plateforme (34).

4. Eolienne selon la revendication 3, **caractérisée par** une plateforme (34) rendue étanche latéralement et vers le bas par rapport à la nacelle (30) de telle manière que la nacelle (30) soit rendue étanche par rapport à la zone des soufflantes (41, 42, 40).

5. Eolienne selon l'une quelconque des revendications précédentes, **caractérisée par** une étanchéité du rotor (10) lui-même et du stator (20) par rapport à la nacelle (30) de telle manière que sensiblement seule une seconde fente d'aération (24) entre le rotor (10) et le stator (20) du générateur reste ouverte et permette une évacuation de l'air aspiré.

6. Eolienne selon l'une quelconque des revendications précédentes, **caractérisée par** des déflecteurs d'air (45) prévus sur toute la périphérie extérieure du rotor (10), qui recouvrent à une distance prescrite la seconde fente d'aération (24) entre le rotor (10) et le stator (20) et s'étendent dans le sens radial d'une mesure prescrite parallèlement au stator (20) du générateur.

7. Eolienne selon l'une quelconque des revendications précédentes, sachant que la nacelle présente une section inférieure (100) qui s'étend d'une mesure prescrite sensiblement parallèlement à la tour et se termine en un bord ouvert inférieur, **caractérisée par** un bord inférieur réalisé comme un bourrelet.

8. Eolienne selon le préambule de la revendication 7, **caractérisée par** une section inférieure (100) de la nacelle (30) s'élargissant en entonnoir d'une mesure prescrite.
